# EUROPEAN PATENT SPECIFICATION

(11) **EP 1 256 704 B1**
(45) Date of publication and mention of the grant of the patent: **30.06.2010**
(21) Application number: 02008855.5
(22) Date of filing: 19.04.2002
(51) Int. Cl.: F02D 35/02, F01N 3/20

(54) **Exhaust gas purification system and method for internal combustion engine**
System und Verfahren zur Abgasreinigung für eine Brennkraftmaschine
Système et méthode pour purifier les gaz d'échappement d'un moteur à combustion interne

(30) Priority: 11.05.2001 JP 2001141495
(43) Date of publication of application: 13.11.2002
(73) Proprietor: NISSAN MOTOR CO., LTD., Yokohama-shi, Kanagawa 221-0023 (JP)
(72) Inventor: Tsuchida, Hirofumi, Yokosuka-shi, Kanagawa 239-0806 (JP); Hotta, Isamu, Yokosuka-shi, Kanagawa 237-0076 (JP); Shiino, Toshikazu, Chigasaki-shi, Kanagawa 253-0064 (JP)
(74) Representative: Grünecker, Kinkeldey, Stockmair & Schwanhäusser Anwaltssozietät

(56) References cited:
- EP-A- 0 758 713
- EP-A- 0 878 609
- EP-A- 1 061 244
- EP-A- 1 081 360
- EP-A- 1 087 119
- EP-A- 1 134 377
- DE-A1- 19 918 756

## Description

The present invention relates to an exhaust purifying system for an internal combustion engine according to the preamble of independent claim1 and an exhaust purifying method for an internal combustion engine according to the preamble of independent claim 11.
Such an exhaust purifying system for an internal combustion engine and such an exhaust purifying method for an internal combustion engine can be taken from the prior art document DE 199 18 756 A1. Said exhaust purifying system is provided with a first NOx catalyst and a second NOx catalyst. Said first NOx catalyst is arranged close to the engine such that same can be brought up to its activation temperature in a relatively short period of time. Said first NOx catalyst is adapted to high operating temperature such that NOx would be desorbed therefrom as exhaust gas temperature of 500°C or higher. The second NOx catalyst is arranged relatively far away from the engine, wherein said second NOx catalyst is adapted to relatively low operating temperature.
In case of lean operation of the engine, said catalysts can trap NOx. Accordingly, the first NOx trapped catalyst traps NOx until the exhaust gas temperature of 500°C would be reached. Under this operating condition, NOx would be released from the first NOx trapped catalyst, wherein said NOx is absorbed by a second NOx trapped catalyst which is arranged downstream of the first NOx catalyst. Due to the arrangement of the second NOx trapped catalyst far away from the engine, the temperature of the exhaust gas would be relatively low when reaching same, so that NOx produced under lean operation of the engine and NOx released from the first NOx trapped catalyst under high temperature condition can be trapped within a second NOx trapped catalyst. Due to such arrangement, the lean operation period of the engine can be prolonged until the second NOx trapped catalyst reaches its maximum trapping capacity. Thus, a regeneration of the exhaust purifying system with a rich exhaust gas configuration has to be carried out after the second NOx trapped catalyst reaches its maximum NOx trapping capacity.

A three-way catalyst has function of purifying HC, CO and NOx simultaneously in a stoichiometric region by oxidation of HC and CO and reduction of NOx. However, the three-way catalyst is not always adequate for lean-burn engines designed to run on a lean air-fuel ratio leaner than the stoichiometry. For lean-burn engines, use can be made of an NOx trap or NOx trap catalyst capable of trapping NOx in the case of inflowing exhaust being lean, and releasing NOx in the case of inflowing exhaust being rich. Such a catalyst is inactive and hence insufficient in catalytic conversion in a low-temperature state immediately after a start of an internal combustion engine.

A published Japanese Patent Application, Publication No. H01(1989)-155934 shows a purifying system for purifying ventilation gases exhausted from a road tunnel with a silica gel-based dehumidifying agent and a zeolite based adsorbent for removing NOx. A published Japanese Patent Application, Publication No. 2000-345832 shows a catalyst system including a low-temperature catalyst for trapping NOx at lower temperatures, and a high-temperature catalyst for trapping NOx at higher temperatures. The low-temperature catalyst is a catalyst having properties to trap NOx at lower temperatures at a cold start of an engine in a stoichiometric condition in which there exist no or little oxygen.
It is an objective of the present invention to provide an exhaust purifying system for an internal combustion engine and an exhaust purifying method for an internal combustion engine as indicated above, wherein removing of NOx is carried out with high efficiency. According to the subject-matter of the present invention, said objective is solved by an exhaust purifying system for an internal combustion engine having the features of independent claim1. Preferred embodiments are laid down in the dependent claims. Moreover, according to the method aspect of the present invention, said objective is solved by an exhaust purifying method for an internal combustion engine having the features of independent claim 11.

Accordingly it is privided an exhaust purifying system for an internal combustion engine, comprises: a low-temperature NOx trap (11b, 21) having properties to trap NOx in a low temperature range in a lean condition in which an air-fuel ratio of exhaust is lean, and to release NOx when a temperature of the low-temperature NOx trap becomes higher; a high-temperature NOx trap (11c, 22) having properties to trap NOx in a high temperature range in the lean condition, and to release NOx in a rich condition in which the air-fuel ratio of exhaust is rich; an NOx release monitor (7, 12, 23, 24) for monitoring an NOx release condition of the low-temperature NOx trap; and a controller (7) for controlling the air-fuel ratio of the exhaust to a lean side during the release of NOx from the low-temperature NOx trap, and for controlling the exhaust air-fuel ratio to a rich side temporarily after the release of NOx from the low-temperature NOx trap.

Accordingly it is provided an exhaust purifying method for an internal combustion engine, comprises: a first step (S4, S25) of detecting a start of NOx release from a low-temperature NOx trap; a second step (S8, S29) of performing a lean operation of the engine upon detection of the start of the NOx release, to cause a high-temperature NOx trap to trap NOx released from the low-temperature NOx trap; a third step (S6, S27) of detecting an end of the NOx release from the low-temperature NOx trap; and a fourth step (S11, S32) of terminating the lean operation of the engine and instead performing a temporary rich control upon detection of the end of the NOx release from the low-temperature NOx trap.
Hereinafter, the present invention is illustrated and explained by means of preferred embodiments in conjunction with the accompanying drawings. In the drawings wherein:

FIG. 1 is a schematic view showing an exhaust purifying engine system according to a first embodiment of the present teaching.

FIG. 2 is a detail view showing an exhaust purifying catalyst employed in the system of FIG. 1.

FIG. 3 is a flowchart showing a control process performed by the system of FIG. 1.

FIG. 4 is schematic view showing a catalyst system according to a second embodiment of the present teaching**.**

FIG. 5 is a detail view showing the structure of an exhaust purifying catalyst employed in the system of FIG. 4.

FIG. 6 is a flowchart showing a control process performed by the exhaust purifying engine system according to the second embodiment.

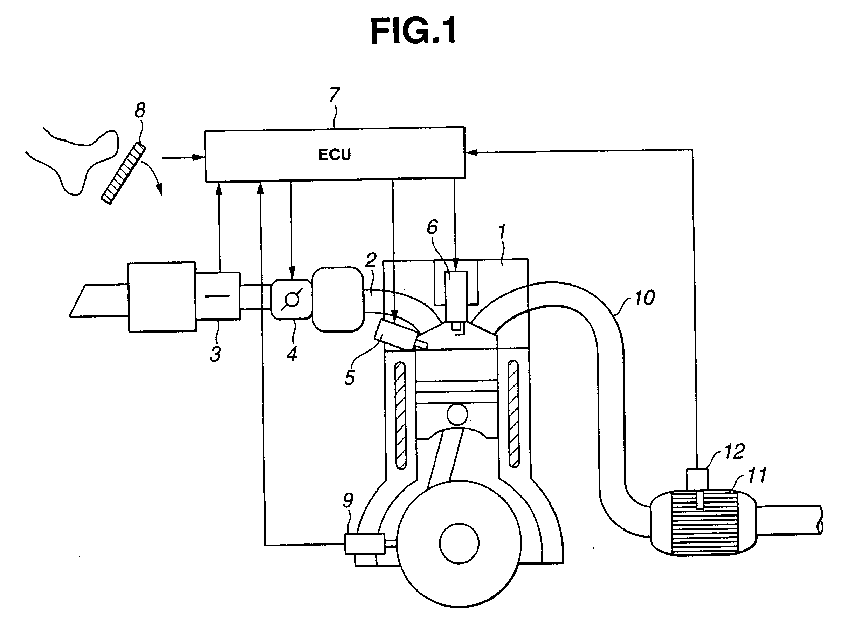

FIG. 1 shows an engine exhaust purifying system according to one embodiment of the present teaching.

An engine 1 has an intake passage 2. An air flowmeter (or air flow sensor) 3 is disposed in intake passage 2, and arranged to sense an intake air quantity Qa. A throttle valve 4 is disposed in intake passage 2 on the downstream side of air flowmeter 3. In this example, throttle valve 4 is controlled electronically to regulate the intake air quantity in response to a control signal. In a combustion chamber of engine 1, there are provided a fuel injector 5 and a spark plug 6. An engine control unit (ECU) 7 functions to drive fuel injector 5 and spark plug 6 by producing drive signals.

Air flowmeter 3 senses the intake air quantity Qa and supplies information on the sensed intake air quantity to ECU 7. An accelerator opening sensor 8 senses an accelerator opening (or accelerator position) APO. A crank angle sensor 9 senses an engine speed Ne, and a coolant temperature sensor senses a temperature Tw of the engine cooling water. Information on these operating conditions is supplied to ECU 7.

ECU 7 computes an engine load (demand torque) L required by engine 1, mainly in accordance with the above-mentioned accelerator opening APO. Then, ECU 7 further computes a target equivalence ratio TFBYA, as an index of a target air-fuel ratio, in accordance with the load L, engine speed Ne and engine coolant temperature Tw. The target equivalence ratio TFBYA is the reciprocal of an air excess factor. ECU 7 drives the electronically controlled throttle valve 4 to obtain an air quantity to achieve this target equivalence ratio TFBYA. For a certain value of the load, this system increases the throttle opening to increase intake air quantity Qa as target air-fuel ratio becomes leaner than the stoichiometric ratio, and decreases the throttle opening to decrease intake air quantity Qa as target air-fuel ratio approaches the stoichiometric ratio.

ECU 7 of this engine control system computes a base fuel injection pulse width Tp (=K×Qa/Ne: K is a constant) in accordance with the actual intake air quantity Qa and engine speed Ne; determines a final fuel injection pulse width (Tp×TFBYA×COEF: COEF is a coefficient for various corrections) by multiplying base fuel injection pulse width Tp by target equivalence ratio TFBYA; and drives fuel injection valve 5 in accordance with the final fuel injection pulse width. The ignition timing of spark plug 6 is controlled in accordance with engine speed Ne and load L.

An exhaust purifying catalyst 11 is provided in an exhaust passage 10 for conveying the exhaust from engine 1. Exhaust purifying catalyst 11 is composed of a low-temperature NOx trap (catalyst) and a high-temperature NOx trap (catalyst). A catalyst temperature sensor 12 is provided in the unit of catalyst 11, and arranged to sense the temperature Tcat of catalyst 11 and to supply the data to ECU 7.

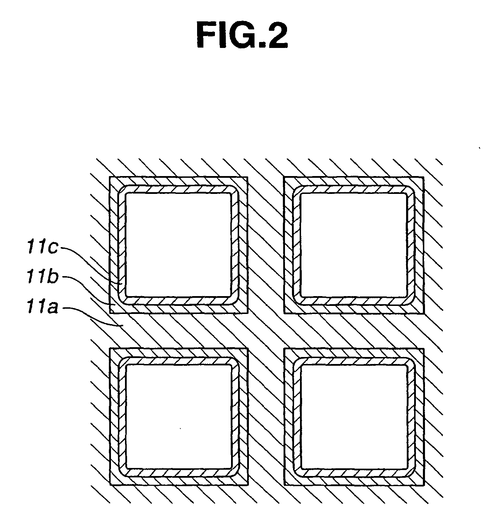

Exhaust purifying catalyst 11 of this example, as shown in FIG. 2, includes a first layer 11b coated, as an inner layer, on a honeycomb carrier 11a, and a second layer 11c coated, as a surface layer, on honeycomb carrier 11a. Honeycomb carrier 11a is coated with the first layer 11b and second layer 11c. In this embodiment, first layer 11b is a layer of low-temperature NOx trap catalyst, and second layer 11c is a layer of high-temperature NOx trap catalyst.

Low-temperature NOx trap catalyst layer 11b contains zeolite as main component. Examples of zeolite which can be used as low temperature NOx trap catalyst layer 11b are: zeolite beta, zeolite A, zeolite Y, zeolite X, ZSM-5, USY, mordenite and ferrierite.

With such a low-temperature NOx trap catalyst layer 11b, the catalyst system can trap NOx adequately in a low temperature range of catalytic temperature equal to or lower than 100°C by controlling the exhaust at appropriate moisture concentration and oxygen concentration. NOx trapped at low temperatures is released when the temperature of catalyst 11b becomes higher. By controlling the moisture during the NOx trap period, the catalyst system can restrain the release or desorption of NOx specifically at temperatures equal to or lower than 200°C.

High-temperature NOx trap catalyst layer 11c of this example is a layer of NOx trap catalyst including a three-way catalyst of alumina carrying at least one component of noble metals such as platinum Pt, palladium Pd and rhodium Rh, and an additive including at least one component selected from alkaline earths typified by barium Ba and alkali metals typified by cesium Cs. The NOx trap catalyst of high-temperature NOx trap catalyst layer 11c has properties to trap NOx in the exhaust in the lean exhaust condition in which the air-fuel ratio of the exhaust is leaner than the stoichiometric ratio when the temperature is equal to or higher than a catalyst activation temperature (about 200°C, for example); and to perform operation of releasing the trapped NOx with reducing component (such as HC, CO and H2) in the exhaust and operation of reduction and purification in the rich exhaust condition in which the exhaust air-fuel ratio is richer than the stoichiometric ratio. The high temperature NOx trap catalyst of this type can perform the above-mentioned NOx trapping operation and purifying operation in the temperature range over the activation temperature of about 200°C. At temperatures lower than the activation temperature, the high temperature NOx trap catalyst is unable to perform purification of NOx sufficiently.

Thus, low-temperature NOx trap (11b) according to this embodiment is composed of a catalyst based on zeolite, and has properties to trap NOx in a low temperature range in a lean atmosphere in which the air-fuel ratio of exhaust is leaner than the stoichiometric ratio, and to release NOx when the temperature of the low-temperature NOx trap becomes higher. Low-temperature NOx trap catalyst according to this embodiment requires oxygen in an amount equal to or larger than a predetermined level, for trapping NOx, unlike an NOx trap catalyst which traps NOx in the stoichiometric condition containing no or little oxygen. High-temperature NOx trap (11c) according to this embodiment has properties to trap NOx in a high temperature range in the lean atmosphere in which the exhaust air-fuel ratio is leaner than the stoichiometric ratio, and to release NOx in a stoichiometric or rich atmosphere in which the exhaust air-fuel ratio is richer than or equal to the stoichiometric ratio.

Engine 1 in this example is an incylinder direct fuel injection engine capable of performing lean-burn operation in a part load region. Lean-burn operation is performed in the part load region from a cold condition (a cooling water temperature of about 25°, for example) after a cold start. In order to improve the fuel economy in actual traffic by starting lean burn mode as soon as possible after start, the system according to this embodiment is set to operate engine 1 in a range of an average air-fuel ratio A/F of 20∼40, even under such a low-temperature condition, in the part load region used in normal driving situation.

The engine exhaust purifying system according to the embodiment is operated as follows:

In the case of a cold start of engine 1 from ordinary temperature (about 25°C), engine 1 is operated in the lean mode immediately after the cold start as mentioned before, and the exhaust containing oxygen and moisture flows into exhaust purifying catalyst 11. In this catalyst 11 including low-temperature NOx trap catalyst layer 11b as inner coating layer, NOx together with moisture is trapped by low-temperature NOx trap catalyst layer 11b which is capable of trapping NOx in the presence of oxygen even at low temperatures below 100°C. Accordingly, this catalyst system can prevent NOx from being released to the atmosphere. Thereafter, the NOx trapped by low-temperature NOx trap catalyst layer 11b tends to desorb as the warm-up of the catalyst proceeds. However, the desorption of the NOx trapped together with moisture is restrained up to about 200°C. Accordingly, this system can restrain the release of NOx unpurified during this period.

When the temperature further rises and exceeds 200°C, low-temperature NOx trap catalyst layer 11b starts releasing the trapped NOx, whereas the surface layer of high-temperature NOx trap catalyst 11c becomes active at temperatures equal to or higher than 200°C. By monitoring the signal from catalyst temperature sensor 12, ECU 7 detects the start of the desorption or the release from low-temperature NOx trap catalyst layer 11b, and controls engine 1 in the lean mode at least during the desorption or release. Consequently, the exhaust air-fuel ratio becomes lean, and hence high-temperature NOx trap catalyst 11c can trap NOx. The NOx released from low-temperature NOx trap catalyst layer 11b is trapped again by high-temperature NOx trap catalyst 11c without being released into the atmosphere. After the elapse of a predetermined time interval (30 seconds, for example) from the time at which the temperature of catalyst 11 reaches 200°C, the desorption or release from low-temperature NOx trap catalyst layer 11b ends, and ECU 7 checks the end of the desorption or release and controls engine 1 so that the exhaust air-fuel ratio is rendered rich temporarily (for about 3 seconds, for example). Consequently, the NOx trapped in high-temperature NOx trap catalyst layer 11c is released and reduced by reducing components in the rich exhaust (HC, CO, H2). Thus, this system can reduce and purify NOx discharged from engine 1 at low temperatures, by a short rich engine operation.

Thereafter, engine 1 returns to the normal lean operation. Under this condition, this catalyst system can reduce NOx emissions at high temperatures by trapping NOx in the lean exhaust with high-temperature NOx trap catalyst layer 11c, and purifying the trapped NOx by reduction by periodical enrichment control.

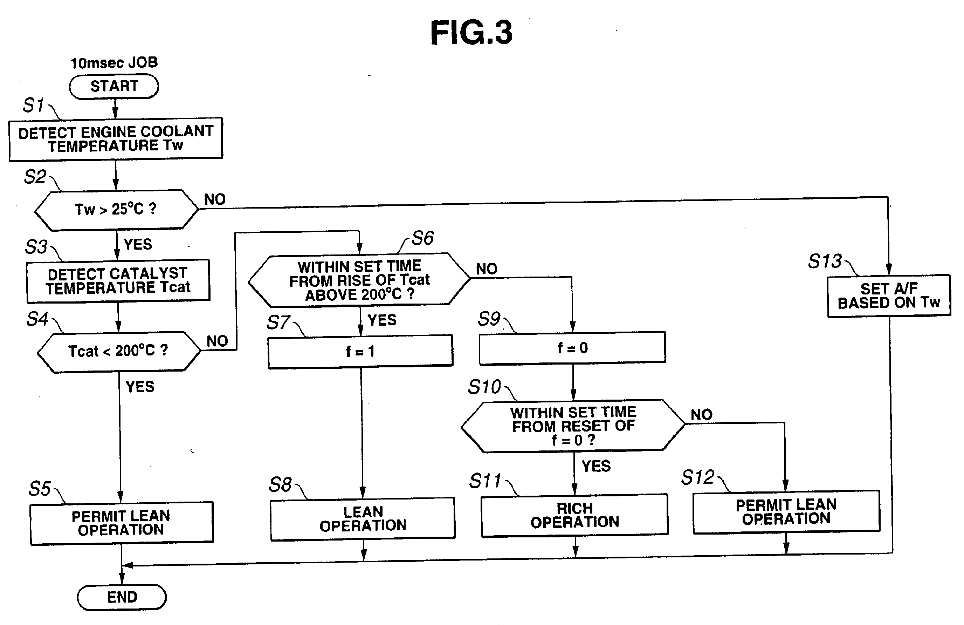

FIG. 3 shows an air-fuel ratio control according to this embodiment. A routine of FIG. 3 is performed at regular time intervals of 10 msec in this example.

This system detects coolant temperature Tw of engine 1 at step S1, and examines whether coolant temperature Tw is higher than a predetermined temperature TwL (25°C in this example). When engine coolant temperature Tw is higher than TwL (25°C), the system assumes that the lean combustion is feasible, and proceeds to step S3.

The system detects catalyst temperature Tcat of exhaust purifying catalyst 11, and examines whether catalyst temperature Tcat is lower than a predetermined temperature TcatL (200°C in this example). This temperature TcatL is set equal to a temperature from which the desorption or release of NOx trapped in low-temperature NOx trap catalyst layer 11b starts. It was confirmed that NOx trapped together with moisture starts desorbing approximately at 200°C. However, this temperature in practice varies more or less in dependence on material of zeolite and other factors. Accordingly, it is preferable to determine the temperature experimentally and set TcatL to the experimentally determined temperature.

When catalyst temperature Tcat is lower than TcatL (200°C), the system proceeds to step S5 and permits the lean engine operation. When the lean operation is permitted in this way, the system sets a lean air-fuel ratio (in the range of A/F from 20 to 40, for example) to improve the fuel economy in accordance with engine speed and load, and operates engine 1 with the lean air-fuel ratio. Therefore, the exhaust contains oxygen, and NOx is trapped in low-temperature NOx trap catalyst layer 11b. Under this condition, the lean operation is merely permitted, so that the engine operating mode is changed immediately to a stoichiometric operation if a high load operation is required by depression of the accelerator pedal, for example.

When temperature Tcat of exhaust purifying catalyst 11 is higher than or equal to predetermined temperature TcatL (200°C), this system assumes that low-temperature NOx trap catalyst layer 11b is in the condition to release NOx therefrom, and proceeds from step S4 to step S6. At step S6, this system examines whether a predetermined first set time has elapsed from the instant at which catalyst temperature Tcat becomes equal to or higher than TcatL (200°C). When the elapsed time from the rise of Tcat over the level of TcatL is still smaller than the predetermined first set time, the system assumes that the desorption or release of NOx is still in progress, and proceeds from step S6 to step S7. The system sets a flag f to one (f=1) to indicate that the NOx desorption or release is in progress, at step S7, and further proceeds to step S8.

At step S8, the system limits the engine operation to the lean mode in order to trap NOx released from low-temperature NOx trap catalyst layer 11b, again with high-temperature NOx trap catalyst layer 11c. In this example, the system sets the before-mentioned equivalence ratio TFBYA to an upper limit (TFBYA≤0.9, for example), and thereby limits the engine operation to the lean mode to hold the exhaust air-fuel ratio to the lean side. Consequently, engine 1 is always operated in the lean mode under this condition, and high-temperature NOx trap catalyst layer 11c can trap the NOx released from low-temperature NOx trap catalyst layer 11b reliably.

When the elapsed time from the time at which the actual catalyst temperature Tcat becomes equal to or higher than predetermined value TcatL (200°C) exceeds predetermined first set time, then the system assumes that the desorption or release of NOx has ended, and proceeds from step S6 to step S9 to reset flag f to zero (f=0). At step S10 following step S9, the system examines whether an elapsed time from the resetting of flag f to zero is shorter than a predetermined second set time. When the predetermined second time has not elapsed yet from the resetting of f to zero, then the system proceeds from step S10 to step S11.

At step S11, the system operates engine 1 temporarily in the rich mode to desorb and purify by reduction the NOx trapped in high-temperature NOx trap catalyst layer 11c. When the elapsed time from the resetting of f to zero becomes equal to or longer than the second set time, then the system assumes that the purification of NOx in high-temperature NOx trap catalyst layer 11c has ended, and proceeds from step S10 to step S12. At step S12, the system permits the lean operation and performs the normal lean operation.

The first set time used in step S6 is employed to take account of the period of desorption or release of NOx from low-temperature NOx trap catalyst layer 11b. In this example, this predetermined first set time is determined experimentally in dependence on the NOx trap quantity in low-temperature NOx trap catalyst layer 11b (determined by the volume and material). The predetermined first set time of step S6 is about 30 sec in this example. The predetermined second set time of step S10 is to take account of the period of releasing and purifying NOx from high-temperature NOx trap catalyst layer 11c. In this example, the second set time of step S10 is determined experimentally in dependence on the NOx desorption rate in high-temperature NOx trap catalyst layer 11c (determined by the volume and material). The predetermined second set time of step S10 is relatively short and set equal to about 3 sec in this example. The predetermined second set time of step S10 is shorter than the predetermined first set time used in step S6.

After the permission of lean operation at step S12, high-temperature NOx trap catalyst layer 11c is in the temperature condition capable of trapping and purifying NOx. Therefore, this system sets the air-fuel ratio to lean ratios in accordance with engine speed and load normally, and sets the air-fuel ratio to rich ratios (A/F is set equal to about 11, for example) periodically for reduction and purification of NOx trapped in high-temperature NOx trap catalyst layer 11c.

When Tw is lower than or equal to TwL (25°C), the system proceeds from step S2 to step S13, and sets the air-fuel ratio to a ratio corresponding to Tw to ensure stable combustion. In this case, the air-fuel ratio is set to a ratio in the stoichiometric region basically, or to a rich air-fuel ratio when the temperature becomes lower.

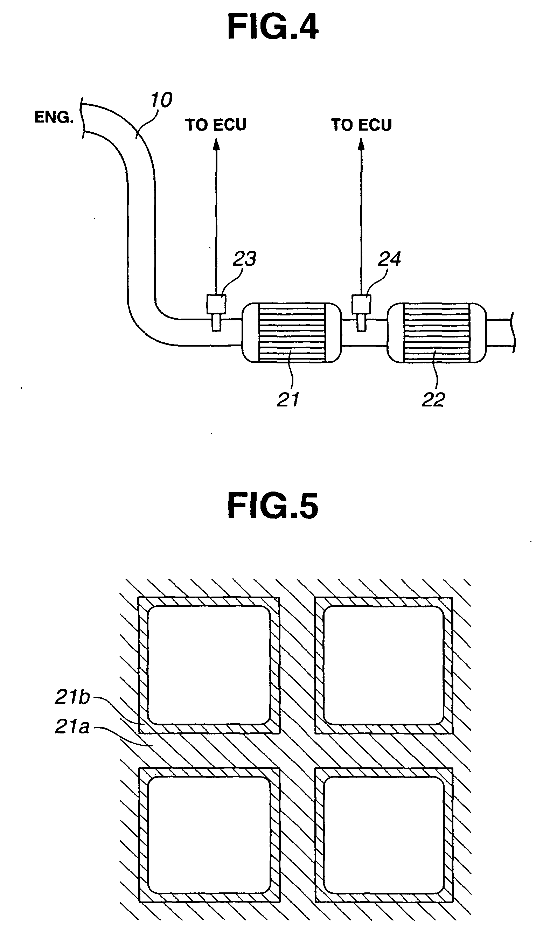

FIG. 4 shows an exhaust purifying system according to a second embodiment of the present teaching**.** In the second embodiment, unlike the first embodiment, there are provided a low-temperature NOx trap or trap catalyst 21 and a high-temperature NOx trap or trap catalyst 22 separately. Low-temperature NOx trap catalyst 21 is disposed upstream of high-temperature NOx trap 22. An upstream NOx sensor 23 is disposed upstream of low-temperature NOx trap catalyst 21. A downstream NOx sensor 24 is disposed between the low-temperature NOx trap catalyst 21 on the upstream side and the high-temperature NOx trap catalyst 22 on the downstream side.

As shown in FIG. 5, low-temperature NOx trap catalyst 21 of this example includes a low-temperature NOx trap catalyst layer 21b coated on a honeycomb carrier 21a. Unlike the first embodiment, honeycomb carrier 21a is coated only with low-temperature NOx trap catalyst layer 21b, and low-temperature NOx trap catalyst 21 has no high-temperature NOx trap catalyst layer. On the other hand, high-temperature NOx trap catalyst 22 includes a high-temperature NOx trap catalyst layer coated on a honeycomb carrier in the same manner as shown in FIG. 5. The honeycomb carrier of high-temperature NOx trap catalyst 22 is coated only with the high-temperature NOx trap catalyst layer.

The exhaust purifying system according to the second embodiment monitors the desorption or release of NOx from low-temperature NOx trap catalyst 21 by using upstream side and downstream side NOx sensors 23 and 24. With these NOx sensors 23 and 24, the system can sense the NOx release condition or NOx desorbing condition accurately, and control the exhaust air-fuel ratio accurately, so that the purification of NOx is ensured.

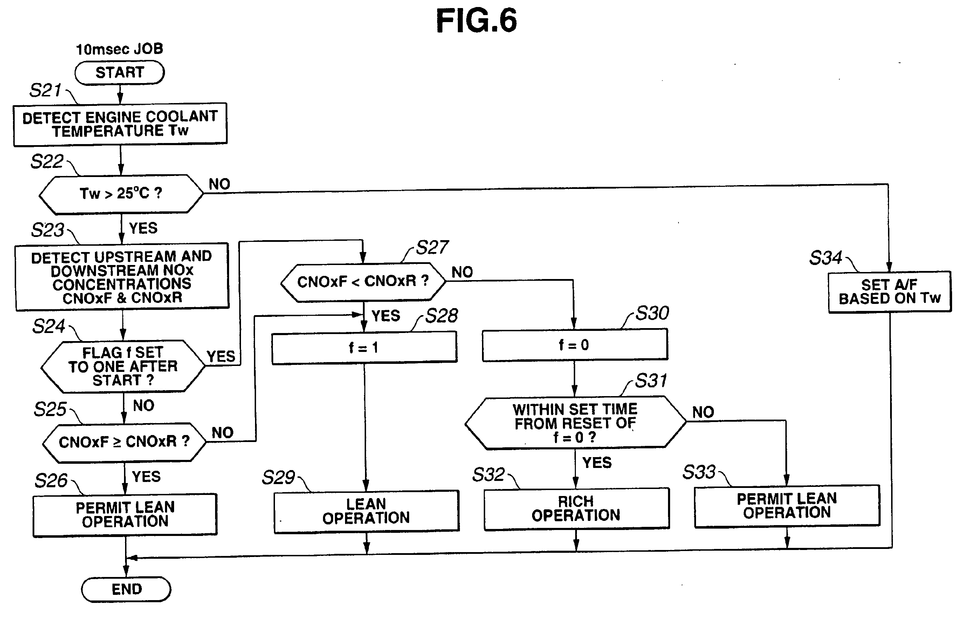

FIG. 6 shows an air-fuel ratio control according to the second embodiment. This routine is performed every 10 msec in this example.

Steps S21 and S22 are substantially identical to steps S1 and S2 of FIG. 3. The system detects engine coolant temperature Tw and compares with predetermined temperature (25°C). When engine coolant temperature Tw is higher than predetermined temperature, the system assumes that the lean combustion is feasible, and proceeds from step S22 to step S23.

At step S23, the system reads an upstream side NOx concentration CNOxF sensed by upstream NOx sensor 23, and a downstream side NOx concentration CNOxR sensed by downstream NOx sensor 24.

At step S24, the system examines whether flag f has ever become equal to one after the start of this time. Step S24 thus checks if the condition of NOx release from low-temperature NOx trap catalyst layer 21b is ever satisfied after the start of engine 1. From step S24, the system proceeds to step S25 when flag f is never set to one, i.e. when the NOx release condition is not satisfied after the start of engine 1.

At step S25, the system compares upstream side NOx concentration CNOxF and downstream NOx concentration CNOxR with each other. When upstream side NOx concentration CNOxF is higher than or equal to downstream side NOx concentration CNOxR (CNOxF≥CNOxR), then the system assumes that low-temperature NOx trap catalyst 21 is in the condition for trapping NOx, and proceeds to step S26 to permit the lean combustion. When the lean operation is permitted, the system sets the air-fuel ratio to a lean air-fuel ratio (in the range of A/F from 20 to 40, for example) to improve the fuel economy in accordance with engine speed and load, and operates engine 1 with the lean air-fuel ratio. Therefore, the exhaust contains oxygen, and NOx is trapped in low-temperature NOx trap catalyst layer 21b. Under this condition, the lean operation is merely permitted, so that the engine operating mode is changed immediately to the stoichiometric operation if a high load operation is required by depression of the accelerator pedal, for example.

When upstream side NOx concentration CNOxF is lower than downstream side NOx concentration CNOxR, and the answer of step S25 is negative, then the system assumes that NOx is being released, and proceeds from step S25 to step S28. Then, the system sets flag f to one (f=1) to indicate the process of NOx release at step S28, and proceeds to next step S29.

At step S29, the system limits the engine operation to the lean mode in order to trap NOx released from low-temperature NOx trap catalyst layer 21, again with high-temperature NOx trap catalyst 22. In this example, the system sets the before-mentioned target equivalence ratio TFBYA to an upper limit (TFBYA≤0.9, for example), and thereby limits the engine operation to the lean mode to hold the exhaust air-fuel ratio to the lean side. Consequently, high-temperature NOx trap catalyst 22 can trap the NOx released from low-temperature NOx trap catalyst layer 21b reliably.

Thereafter, step S24 provides an affirmative answer indicating that flag f is set to one after the start, and the system proceeds from step S24 to step S27. At step S27, the system examines whether downstream side NOx concentration CNOxR is higher than upstream side NOx concentration CNOxF (CNOxF<CNOxR). When downstream side NOx concentration CNOxR is higher than upstream side NOx concentration CNOxF (CNOxF<CNOxR), then the system assumes that the release of NOx is in progress, and proceeds to the program section of steps S28 and S29 to continue the lean operation.

When downstream side NOx concentration CNOxR is not higher than upstream side NOx concentration CNOxF (CNOxF≥CNOxR), then the system assumes that the NOx release has ended, and proceeds from step S27 to step S30 to reset flag f to zero (f=0)

At step S31 following step S30, the system examines whether an elapsed time from the resetting of flag f to zero is shorter than a predetermined set time. When the predetermined set time has not elapsed yet from the resetting of f to zero, then the system proceeds from step S31 to step S32.

At step S32, the system operates engine 1 temporarily in the rich mode to desorb and purify by reduction the NOx trapped in high-temperature NOx trap catalyst 24 . When the elapsed time from the resetting of f to zero becomes equal to or longer than the predetermined set time (interval), then the system assumes that the purification of NOx in high-temperature NOx trap catalyst 24 has ended and proceeds from step S31 to step S33. At step S33, the system permits the lean operation and performs the normal lean operation.

After the permission of lean operation at step S33, high-temperature NOx trap catalyst 24 is in the temperature condition capable of trapping and purifying NOx. Therefore, this system sets the air-fuel ratio to lean ratios in accordance with engine speed and load normally, and sets the air-fuel ratio to a rich ratio (A/F is set equal to about 11, for example) periodically for reduction and purification of NOx trapped in high-temperature NOx trap catalyst 24.

When Tw is lower than or equal to TwL (25°C), the system proceeds from step S22 to step S34, and sets the air-fuel ratio to a ratio corresponding to Tw to ensure stable combustion. In this case, the air-fuel ratio is set to the stoichiometric ratio basically, or to a rich air-fuel ratio when the temperature becomes lower.

In the example shown in FIG. 4, there are provided two NOx sensors 23 and 24 located, respectively, on the upstream side and downstream side of low-temperature NOx trap catalyst 21. However, it is possible to estimate the upstream side NOx concentration from one or more engine operating conditions and thereby to detect the NOx release state with an uncostly configuration requiring no upstream side NOx sensor. In this case, the system compares the upstream side NOx concentration estimated from one or more engine operating conditions, and the downstream side NOx concentration sensed by downstream NOx sensor 24, and by so doing detects the condition of NOx released from low-temperature NOx trap catalyst 21. One way to estimate NOx concentration is to prepare data experimentally on NOx concentration in the exhaust in dependence on one or more of engine speed, load, air-fuel ratio and EGR rate. By using the data obtained experimentally in this way, and stored in a memory of ECU 7, the system can estimate the NOx concentration in accordance with one or more operating conditions during actual engine operation.

## Claims

1. An exhaust purifying system for an internal combustion engine, comprising:
a low-temperature NOx trap catalyst (11 b, 21) having properties to trap NOx in a low temperature range in a lean condition in which an air-fuel ratio of exhaust is lean, and to release NOx when the temperature of the low-temperature NOx trap catalyst becomes higher;
a high-temperature NOx trap catalyst (11c, 22) having properties to trap NOx in a high temperature range in the lean condition, and to release NOx in a rich condition in which the air-fuel ratio of exhaust is rich;
an NOx release monitor (7, 12, 23, 24) for monitoring an NOx release condition of the low-temperature NOx trap catalyst; and
a controller (7) for controlling the air-fuel ratio of the exhaust;
**characterized in that**
the controller (7) is configured for controlling the air-fuel ratio of the exhaust to a lean side during the release of NOx from the low-temperature NOx trap catalyst, and for controlling the exhaust air-fuel ratio to a rich side temporarily in response to each end of the release of NOx from the low-temperature NOx trap catalyst, to produce a rich exhaust to reduce NOx released from the high-temperature NOx trap catalyst (11c, 22).

2. An exhaust purifying system according to claim 1, **characterized in that** the low-temperature NOx trap catalyst (11b. 21) and the high-temperature NOx trap catalyst (11c, 22) are so arranged that NOx released from the low-temperature NOx trap catalyst is trapped again by the high-temperature NOx trap catalyst.

3. An exhaust purifying system according to claim 1, **characterized in that** the low-temperature NOx trap catalyst (11b) and high-temperature NOx trap catalyst (11c) are in the form of layers both formed on a single carrier, and the high-temperature NOx trap catalyst is formed as a surface layer.

4. An exhaust purifying system according to claim 1, **characterized in that** the high-temperature NOx trap catalyst (22) is disposed on a downstream side of the low-temperature NOx trap catalyst (21).

5. An exhaust purifying system according to claim 3, **characterized in that** the NOx release monitor (7, 23, 24) is arranged to monitor the NOx release condition of the low-temperature NOx trap catalyst (21) by monitoring an upstream side NOx concentration of exhaust flowing into the low-temperature NOx trap catalyst and a downstream side NOx concentration of exhaust flowing out of the low-temperature NOx trap catalyst.

6. An exhaust purifying system according to claim 4, **characterized in that** the NOx release monitor comprises an upstream NOx sensor (23) disposed on the upstream side of the low-temperature NOx trap catalyst, for sensing the upstream side NOx concentration, and a downstream NOx sensor (24) disposed on the downstream side of the low-temperature NOx trap catalyst, for sensing the downstream side NOx concentration.

7. An exhaust purifying system according to claim 4, **characterized in that** the downstream side NOx concentration is sensed by a downstream NOx sensor (24) whereas the upstream side NOx concentration is estimated from an engine operating condition.

8. An exhaust purifying system according to claim 1, **characterized in that** the NOx release monitor comprises a catalyst temperature sensor (12) for sensing the temperature of the low-temperature NOx trap catalyst, to monitor the NOx release condition of the low-temperature NOx trap catalyst.

9. An exhaust purifying system according to claim 1, **characterized in that** the NOx release monitor comprises a sensor (12, 23, 24) for sensing a condition of the low-temperature NOx trap catalyst to monitor the NOx release condition, and a condition discriminating section for producing an NOx release start signal indicative of a start of the release of NOx from the low-temperature NOx trap catalyst and an NOx release end signal indicative of an end of the release of NOx from the low-temperature NOx trap catalyst, in accordance with the condition sensed by the sensor, and the controller is configured to start the lean operation forcibly (S8, S29) in response to the NOx release start signal, and to start a temporary rich operation (S11, S32) in response to the NOx release end signal.

10. An exhaust purifying system according to one of the claims 1 to 9, **characterized in that** the low-temperature NOx trap catalyst (11b, 21) contains zeolite as a main component.

11. An exhaust purifying method for an internal combustion engine comprising:
trapping NOx by a low-temperature NOx trap catalyst (11b, 21) in a low temperature range in a lean condition in which an air-fuel ratio of exhaust is lean,
allowing release of NOx from the low-temperature NOx trap catalyst (11b. 21) when the temperature of the low-temperature NOx trap catalyst (11b, 21) becomes higher;
trapping NOx in a high-temperature NOx trap catalyst (11c, 22) in a high temperature range in the lean condition, and
allowing release NOx from the high-temperature NOx trap catalyst (11c, 22) in a rich condition in which the air-fuel ratio of exhaust is rich;
**characterized by**
a first step (S4, S25) of detecting a start of NOx release from a low-temperature NOx trap catalyst (11b, 21);
a second step (S8, S29) of performing a lean operation of the engine upon detection of the start of the NOx release, to cause the high-temperature NOx trap catalyst (11c, 22) to trap NOx released from the low-temperature NOx trap catalyst (11b, 21);
a third step (S6, S27) of detecting each end of the NOx release from the low-temperature NOx trap catalyst (11b, 21); and
a fourth step (S11, S32) of responding to the detection of the end of the NOx release from the low-temperature NOx trap catalyst (11b, 21), by terminating the lean operation of the engine and instead performing a.temporary rich control to produce a rich exhaust to reduce NOx released the high-temperature NOx trap catalyst (11c, 22).

## Patentansprüche

1. Abgasreinigungssystem für eine Brennkraftmaschine, aufweisend:
einen Niedrigtemperatur- NOx- Speicherkatalysator (11b, 21) mit Eigenschaften, um NOx zu speichern in einem Niedrigtemperaturbereich in einem mageren Zustand, bei dem ein Luft- Kraftstoff- Verhältnis mager ist, und NOx freizugeben,
wenn die Temperatur des Niedrigtemperatur- NOx- Speicherkatalysators höher wird;
einen Hochtemperatur- NOx- Speicherkatalysator (11c, 22) mit Eigenschaften, um NOx in einem Hochtemperaturbereich in dem mageren Zustand zu speichern und
um NOx in einem fetten Zustand, in dem das Luft- Kraftstoff- Verhältnis fett ist, freizugeben;
einen NOx- Freigabemonitor (7, 12, 23, 24) zum Überwachen des NOx- Freigabezustandes des Niedrigtemperatur- NOx- Speicherkatalysators; und
einen Steuerungseinrichtung (7) zum Steuern des Luft- Kraftstoff- Verhältnisses des Abgases;
**dadurch gekennzeichnet, dass**
die Steuerungseinrichtung (7) konfiguriert ist zum Steuern des Luft- Kraftstoff-Verhältnisses auf eine magere Seite während der Freigabe von NOx von dem Niedrigtemperatur- NOx- Speicherkatalysator und zum zeitweiligen Steuern des Abgas- Luft- Kraftstoff- Verhältnisses auf eine fette Seite, in Abhängigkeit von jedem Ende der Freigabe von NOx von dem Niedrigtemperatur- NOx- Speicherkatalysator (11c, 22), um ein fettes Abgas zu erzeugen, um NOx zu reduzieren, das von dem Hochtemperatur- NOx- Speicherkatalysator abgegeben wird.

2. Abgasreinigungssystem nach Anspruch 1, **dadurch gekennzeichnet, dass** der Niedrigtemperatur- NOx- Speicherkatalysator (11b, 21) und der Hochtemperatur-NOx- Speicherkatalysator (11c, 22) so angeordnet sind, dass von dem Niedrigtemperatur- NOx- Speicherkatalysator freigesetztes NOx wieder durch den Hochtemperatur- NOx- Speicherkatalysator gespeichert wird.

3. Abgasreinigungssystem nach Anspruch 1, **dadurch gekennzeichnet, dass** der Niedrigtemperatur- NOx- Speicherkatalysator (11 b) und der Hochtemperatur-NOx- Speicherkatalysator (11c) in der Form von Schichten, beide gebildet auf einem einzelnen Träger, sind und der Hochtemperatur- NOx- Speicherkatalysator als eine Oberflächenschicht gebildet ist.

4. Abgasreinigungssystem nach Anspruch 1, **dadurch gekennzeichnet, dass** der Hochtemperatur- NOx- Speicherkatalysator (22) auf einer stromabwärtigen Seite des Niedrigtemperatur- NOx- Speicherkatalysators angeordnet ist.

5. Abgasreinigungssystem nach Anspruch 3, **dadurch gekennzeichnet, dass** der NOx- Freigabemonitor (7, 23, 24) angeordnet ist, den NOx- Freigabezustand des Niedrigtemperatur- NOx- Speicherkatalysator (21) durch Überwachen einer stromaufseitigen NOx- Konzentration des Abgases, das in den Niedrigtemperatur-NOx- Speicherkatalysator strömt, und einer stromabseitigen NOx- Konzentration des Abgases, das aus dem Niedrigtemperatur- NOx- Speicherkatalysator strömt, zu überwachen.

6. Abgasreinigungssystem nach Anspruch 4, **dadurch gekennzeichnet, dass** der NOx- Freigabemonitor aufweist einen stromaufseitigen NOx- Sensor (23), angeordnet auf der stromaufwärtigen Seite des Niedrigtemperatur- NOx- Speicherkatalysators, zum Erfassen der stromaufseitigen NOx- Konzentration, und einen stromabwärtigen NOx- Sensor (24), angeordnet zum Erfassen der stromabseitigen NOx- Konzentration.

7. Abgasreinigungssystem nach Anspruch 4, **dadurch gekennzeichnet, dass** die stromabseitige NOx- Konzentration durch einen stromabwärtigen NOx- Sensor (24) erfasst wird, während die stromaufseitige NOx- Konzentration aus einem Brennkraftmaschinen- Betriebszustand abgeschätzt wird.

8. Abgasreinigungssystem nach Anspruch 1, **dadurch gekennzeichnet, dass** der NOx- Freigabemonitor einen Katalysator- Temperatursensor (12) zum Erfassen der Temperatur des Niedrigtemperatur- NOx- Speicherkatalysators aufweist, um den NOx- Freigabezustand des Niedrigtemperatur- NOx- Speicherkatalysators zu überwachen.

9. Abgasreinigungssystem nach Anspruch 1, **dadurch gekennzeichnet, dass** der NOx- Freigabemonitor einen Sensor (12, 23, 24) zum Erfassen eines Zustandes des Niedrigtemperatur- NOx- Speicherkatalysators aufweist, um den NOx- Freigabezustand des Niedrigtemperatur- NOx- Speicherkatalysators zu überwachen, und einen Zustandsunterscheidungsabschnitt zum Erzeugen eines NOx- Freigabe- Startsignales, das einen Beginn der Freigabe von NOx aus dem Niedrigtemperatur- NOx- Speicherkatalysator repräsentiert und ein NOx- Freigabe- Endsignal, das ein Ende der Freigabe von NOx aus dem Niedrigtemperatur- NOx- Speicherkatalysator repräsentiert, entsprechend mit dem durch den Sensor erfassten Zustand, und die Steuerungseinrichtung konfiguriert ist, zwangsweise den Magerbetrieb (S8, S29) in Abhängigkeit von dem NOx- Freigabe- Startsignal zu starten und einen zeitweiligen fetten Betrieb (S11, S32) in Abhängigkeit von dem NOx- Freigabe- Endsignal zu starten.

10. Abgasreinigungssystem nach einem der Ansprüche 1 bis 9, **dadurch gekennzeichnet, dass** der Niedrigtemperatur- NOx- Speicherkatalysator (11 b, 21) Zeolit als ein Hauptbestandteil enthält.

11. Abgasreinigungsverfahren für eine Brennkraftmaschine, aufweisend:
Speichern von NOx durch einen Niedrigtemperatur- NOx- Speicherkatalysator (11 b, 21) in einem Niedrigtemperaturbereich in einem mageren Zustand, in dem ein Luft- Kraftstoff- Verhältnis mager ist, Gestatten der Freigabe von NOx aus dem Niedrigtemperatur- NOx- Speicherkatalysator (11b, 21), wenn die Temperatur des Niedrigtemperatur- NOx- Speicherkatalysators (11b, 21) höher wird;
Speichern von NOx in einem Hochtemperatur- NOx- Speicherkatalysator (11 c, 22) in einem Hochtemperaturbereich in dem mageren Zustand, und
Gestatten der Freigabe aus dem Niedrigtemperatur- NOx- Speicherkatalysator (11 b, 21) in einem fetten Zustand, in dem das Luft- Kraftstoff- Verhältnis fett ist;
**gekennzeichnet durch**
einen ersten Schritt (S4, S25) des Erfassens eines Starts der NOx- Freigabe aus einem Niedrigtemperatur- NOx- Speicherkatalysator (11 b, 21);
einem zweiten Schritt (S8, S29) des Ausführens eines mageren Betriebs der Brennkraftmaschine bei Erfassung der NOx- Freigabe, um den Hochtemperatur-NOx- Speicherkatalysator (11c, 22) zu veranlassen, NOx, freigegeben aus dem Niedrigtemperatur- NOx- Speicherkatalysator (11b, 21), zu speichern;
einen dritten Schritt (s6, S27) des Erfassens jedes Endes der NOx- Freigabe aus dem Niedrigtemperatur- NOx- Speicherkatalysator (11b, 21); und
einen vierten Schritt (S11, S32) des Reagierens auf die Erfassung des Endes der NOx- Freigabe aus dem Niedrigtemperatur- NOx- Speicherkatalysator (11 b, 21) durch Beenden des mageren Betriebs der Brennkraftmaschine und an Stelle dessens Ausführen einer zeitweilig fetten Steuerung, um ein fettes Abgas zu erzeugen, um NOx, freigegeben von dem Hochtemperatur- NOx- Speicherkatalysator (11c, 22), zu reduzieren.

## Revendications

1. Système d'épuration des gaz d'échappement pour un moteur à combustion interne, comprenant:
un catalyseur de piège des NOx basse température (11b, 21) ayant des propriétés pour piéger les NOx dans une plage de basse température dans une condition appauvrie dans laquelle un rapport air-combustible des gaz d'échappement est appauvri, et pour libérer les NOx lorsque la température du catalyseur de piège des NOx basse température devient plus élevée;
un catalyseur de piège des NOx haute température (11c, 22) ayant des propriétés pour piéger les NOx dans une plage de haute température dans la condition appauvrie, et pour libérer les NOx dans une condition riche dans laquelle le rapport air-combustible des gaz d'échappement est riche;
un organe de surveillance de libération de NOx (7, 12, 23, 24) pour surveiller une condition de libération des NOx du catalyseur de piège des NOx basse température; et
un dispositif de commande (7) pour commander le rapport air-combustible des gaz d'échappement;
**caractérisé en ce que**
le dispositif de commande (7) est configuré pour commander le rapport air-combustible des gaz d'échappement vers un côté appauvri durant la libération des NOx du catalyseur de piège des NOx basse température, et pour commander le rapport air-combustible des gaz d'échappement vers un côté riche temporairement en réponse à chaque fin de libération des NOx du catalyseur de piège des NOx basse température, pour produire un échappement riche afin de réduire les NOx libérés du catalyseur de piège des NOx haute température (11c, 22).

2. Système d'épuration des gaz d'échappement selon la revendication 1, **caractérisé en ce que** le catalyseur de piège des NOx basse température (11b, 21) et le catalyseur de pièce des NOx haute température (11c, 22) sont agencés de façon que les NOx libérés du catalyseur de piège des NOx basse température soient piégés à nouveau par le catalyseur de piège des NOx haute température.

3. Système d'épuration des gaz d'échappement selon la revendication 1, **caractérisé en ce que** le catalyseur de piège des NOx basse température (11b) et le catalyseur de piège des NOx haute température (11c) se présentent sous la forme de couches, réalisées chacune sur un seul support, et le catalyseur de piège des NOx haute température est réalisé comme une couche de surface.

4. Système d'épuration des gaz d'échappement selon la revendication 1, **caractérisé en ce que** le catalyseur de piège des NOx haute température (22) est disposé sur un côté en aval du catalyseur de piège des NOx basse température (21).

5. Système d'épuration des gaz d'échappement selon la revendication 3, **caractérisé en ce que** l'organe de surveillance de libération des NOx (7, 23, 24) est agencé pour surveiller la condition de libération des NOx du catalyseur de piège des NOx basse température (21) en surveillant une concentration des NOx, côté amont, des gaz d'échappement s'écoulant dans le catalyseur de piège des NOx basse température et une concentration des NOx, côté aval, des gaz d'échappement s'écoulant du catalyseur des piège de NOx basse température.

6. Système d'épuration des gaz d'échappement selon la revendication 4, **caractérisé en ce que** l'organe de surveillance de libération des NOx comprend un capteur de NOx amont (23) disposé sur le côté amont du catalyseur de piège des NOx basse température, pour détecter la concentration des NOx côté amont, et un capteur des NOx aval (24) disposé sur le côté aval du catalyseur de piège des NOx basse température, pour détecter la concentration des NOx côté aval.

7. Système d'épuration des gaz d'échappement selon la revendication 4, **caractérisé en ce que** la concentration des NOx côté aval est détectée par un capteur des NOx aval (24) tandis que la concentration des NOx côté amont est estimée à partir d'un état de fonctionnement du moteur.

8. Système d'épuration des gaz d'échappement selon la revendication 1, **caractérisé en ce que** l'organe de surveillance de libération des NOx comprend un capteur de température de catalyseur (12) pour détecter la température du catalyseur de piège des NOx basse température, pour surveiller la condition de libération des NOx du catalyseur de piège des NOx basse température.

9. Système d'épuration des gaz d'échappement selon la revendication 1, **caractérisé en ce que** l'organe de surveillance de libération des NOx comprend un capteur (12, 23, 24) pour détecter une condition du catalyseur de piège des NOx basse température pour surveiller la condition de libération des NOx, et une section de discrimination de condition pour produire un signal de départ de libération des NOx indiquant un départ de la libération des NOx du catalyseur de piège des NOx basse température et un signal final de libération des NOx indiquant une fin de libération des NOx du catalyseur de piège des NOx basse température, en accord avec la condition détectée par le capteur, et le dispositif de commande est configuré pour démarrer l'opération appauvrie de force (S8, S29) en réponse au signal de départ de libération des NOx, et pour démarrer une opération riche temporaire (S11, S32) en réponse au signal de fin de libération des NOx.

10. Système d'épuration des gaz d'échappement selon l'une des revendications 1 à 9, **caractérisé en ce que** le catalyseur de piège des NOx basse température (11b, 21) contient de la zéolite comme composant principal.

11. Procédé d'épuration des gaz d'échappement pour un moteur à combustion interne comprenant:
piéger les NOx par un catalyseur de piège des NOx basse température (11b, 21) dans une plage de basse température dans une condition appauvrie dans laquelle un rapport air-combustible des gaz d'échappement est appauvri,
permettre la libération des NOx du catalyseur de piège des NOx basse température (11b, 21) lorsque la température du catalyseur de piège des NOx basse température (11b, 21) devient plus élevée;
piéger les NOx dans un catalyseur de piège des NOx haute température (11c, 22) dans une plage de température élevée dans la condition appauvrie, et
permettre la libération des NOx du catalyseur de piège des NOx haute température (11c, 22) dans une condition riche dans laquelle le rapport air-combustible des gaz d'échappement est riche;
**caractérisé par**
une première étape (S4, S25) consistant à détecter un démarrage de la libération des NOx d'un catalyseur de piège des NOx basse température (11b, 21);
une deuxième étape (S8, S29) consistant à exécuter une opération appauvrie du moteur lors de la détection du départ de la libération des NOx, pour amener le catalyseur de piège des NOx haute température (11c, 22) à piéger les NOx libérés par le catalyseur de piège des NOx basse température (11b, 21);
une troisième étape (S6, S27) consistant à détecter chaque fin de la libération des NOx du catalyseur de piège des NOx basse température (11b, 21); et
une quatrième étape (S11, S32) consistant à répondre à la détection de la fin de la libération des NOx par le catalyseur de piège des NOx basse température (11b, 21) en terminant l'opération appauvrie du moteur en exécutant à la place une commande riche temporaire pour produire des gaz d'échappement riches afin de réduire les NOx libérés par le catalyseur de piège des NOx haute température (11c, 22).
